Europäisches Patentamt

**European Patent Office**

**Office européen des brevets**

(11) Publication number:

**0 096 906**
**B1**

(12)                    **EUROPEAN PATENT SPECIFICATION**

(45) Date of publication of patent specification: **02.04.86**

(51) Int. Cl.⁴: **C 08 F 283/10,** C 08 G 59/68, C 08 G 59/42

(21) Application number: **83200647.2**

(22) Date of filing: **04.05.83**

(54) **Heat-curable epoxy compositions and their use in preparing formed articles.**

(30) Priority: **14.06.82 US 387998**
**19.07.82 US 399576**

(43) Date of publication of application:
**28.12.83 Bulletin 83/52**

(45) Publication of the grant of the patent:
**02.04.86 Bulletin 86/14**

(84) Designated Contracting States:
**BE DE FR GB IT NL SE**

(56) References cited:
**FR-A-2 208 936**
**GB-A-1 006 848**
**GB-A-2 029 433**
**US-A-4 056 506**
**US-A-4 284 753**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Corley, Larry Steven**
**6807 San Pablo Drive**
**Houston Texas 77083 (US)**

(74) Representative: **Aalbers, Onno et al**
**P.O. Box 302**
**NL-2501 CH The Hague (NL)**

Courier Press, Leamington Spa, England.

**0 096 906**

## Description

This invention relates to heat-curable epoxy compositions and their use in preparing formed articles.

Curable compositions comprising polyester resins and styrene are known and have been described in, for example, U.S. Patents Nos. 2,691,007, 3,574,157 and 3,634,542.

Compositions based on polyether resin and styrene blends are also known. These blends generally exhibit poor processability, short pot life, high viscosity and cure with conventional curing agents to produce products which do not exhibit good physical properties, such as high heat deflection temperatures and retention of physical properties at elevated temperatures. For example, in U.S. Patent No. 2,939,859 there are disclosed compositions based on polyepoxide/styrene blends cured with peroxides and/or amines. Although these compositions do exhibit a reduction of viscosity over a corresponding epoxy composition which does not contain styrene, the resulting products do not exhibit high heat deflection temperatures.

Other polyepoxide/styrene compositions are described in U.S. Patents Nos. 3,009,638 and 3,099,898, which are directed to the use of anhydride curing agents, optionally in the presence of a peroxide and/or tertiary amine accelerator.

Epoxy/styrene blends which can be cured with a special curing agent/curing accelerator blend, e.g., an acid anhydride in combination with an onium salt, to yield products which exhibit improved physical properties, especially increased heat deflection temperatures and excellent retention of physical properties at elevated temperatures are disclosed in U.S. Patent No. 4,284,753.

It has now been discovered that heat-curable compositions having excellent chemical and physical properties may be prepared in similar compositions to those referred to above but wherein the unsaturated aromatic monomer, e.g. styrene, is partially or entirely replaced by one or more comonomers.

GB—A—1,006,848 is concerned with casting and potting resins for electrical applications comprising a) an epoxy resin, b) an unsaturated monomer, e.g. styrene, acrylonitrile or methyl methacrylate, c) chlorendic anhydride, d) a tertiary amine curing agent and e) a curing amount of an organic peroxide. The heat deflection temperature of these known compositions leaves room for further improvement.

According to the invention there is provided a heat curable composition comprising:

(1) from 30 to 99 parts of an epoxy compound having on average more than one epoxy group per molecule,

(2) from 1 to 70 parts by weight of a polyacrylate or polymethacrylate ester of a polyol or of a blend of polyacrylate or polymethacrylate ester of a polyol with styrene,

(3) from 0.25 to 2.0 stoichiometric equivalents, based on the epoxy resin, of a polycarboxylic acid anhydride,

(4) an accelerating amount of at least one epoxy curing accelerator, being an onium compound or a stannous salt of a monocarboxylic acid,

(5) a curing amount of an organic peroxide.

Suitable epoxy compounds for inclusion in compositions of the present invention comprise those compounds containing on average more than one epoxy group per molecule. These epoxy compounds may be saturated or unsaturated, aliphatic, cycloaliphatic, aromatic or heterocyclic and may be substituted if desired with non-interfering substituents such as halogen atoms, hydroxyl groups and ether radicals. They may also be monomeric or polymeric.

Various examples of liquid epoxy compounds which may be used in the compositions of the invention are given in U.S. Patent No. 2,633,458. Other suitable epoxy compounds are disclosed in U.S. Patents Nos. 3,356,624; 3,408,219; 3,446,762 and 3,637,618.

Preferred epoxy compounds are the glycidyl polyethers of polyhydric phenols and polyhydric alcohols, especially the glycidyl polyethers of 2,2 - bis(4 - hydroxyphenyl)propane having an average molecular weight in the range from 300 to 3,000 and an epoxide equivalent weight in the range from 140 to 2,000 and more preferably an average molecular weight in the range from 300 to 1,000 and an epoxide equivalent weight from 140 to 650.

Other suitable epoxy compounds include those compounds derived from polyhydric phenols and having at least one vicinal epoxy group wherein the carbon-to-carbon bonds within the six-membered ring are saturated. Examples of such epoxy compounds are described in U.S. Patent No. 3,336,241.

Preferred saturated epoxy compounds are the hydrogenated glycidyl ethers of 2,2 - bis(4 - hydroxyphenol)propane, sometimes called the diglycidyl ethers of 2,2 - bis(4 - cyclohexanol)propane.

Other examples of suitable epoxy compounds include the glycidyl ethers of novolac resins, e.g. those described in U.S. Patent No. 2,658,885.

For most applications it is desirable to utilize an epoxy compound which is liquid or semi-liquid under the conditions of application. Accordingly, a blend of a liquid and a solid epoxy compound may be employed. Liquid epoxy compounds, particularly liquid glycidyl ethers of 2,2 - bis(4 - hydroxyphenyl)propane, having an average molecular weight in the range 380 to 400 and an epoxide equivalent weight in the range 180 to 210 have been found to be very suitable.

Suitable components (2) include the polyacrylate and polymethacrylate esters of polyols containing

2

more than one terminal acrylate or methacrylate group. These esters are the acrylic and methacrylic acid esters of aliphatic polyhydric alcohols such as, for example, the di- and polyacrylates and the di- and polymethacrylates of alkylene glycols, polyoxyalkylene glycols, alicyclic glycols and higher polyols, such as ethylene glycol, triethylene glycol, tetraethylene glycol, tetramethylene glycol, hexanediol, trimethylolethane, trimethylolpropane, pentaerythritol, dipentaerythritol and tripentaerythritol. Typical such esters include trimethylolpropane triacrylate, trimethylolethane triacrylate, trimethylolpropane, trimethacrylate, trimethylolethane trimethacrylate, tetramethylene glycol dimethacrylate, ethylene glycol dimethacrylate, triethylene glycol dimethacrylate, tetraethylene glycol dimethacrylate, pentaerythritol triacrylate, pentaerythritol tetracrylate, 1,6 - hexanediol diacrylate, 1,6 - hexanediol dimethacrylate, dipentaerythritol tetraacrylate, dipentaerythritol pentaacrylate, neopentyl glycol dimethacrylate, trimethylolpropane triacrylate, pentaerythritol triacrylate, and 1,3 - butylene dimethacrylate. Trimethylolpropane trimethacrylate and pentaerythritol triacrylate are particularly preferred.

Blends of the polyepoxide and unsaturated monomers contain from 30% to 99% epoxy compound and from 1% to about 70% other monomers on a weight basis. An especially preferred range is from about 50% to 85% epoxy compound and from 15% to 50% component (2). In the case of compositions containing styrene, the total unsaturated monomer present suitably comprises a blend of from 5% to 70% by weight of aromatic monomer and from 30% to 95% by weight of other unsaturated monomer(s). The styrene may also partly be replaced by divinylbenzene.

Typical polycarboxylic acid anhydrides are trimellitic anhydride, maleic acid, maleic anhydride, crotonic acid, itaconic acid, itaconic anhydride, tetrahydrophthalic acid, fumaric acid, phthalic anhydride, isophthalic acid, terephthalic acid, hexahydrophthalic anhydride, dianhydride ester of trimellitic anhydride with ethylene glycol, dodecenyl succinic anhydride, dichloromaleic anhydride, tetrachlorophthalic anhydride, chlorendic anhydride, pyromellitic dianhydride, dimethylmaleic anhydride, n - butylmaleic anhydride, phenylmaleic anhydride, bromophenylmaleic anhydride and 3,3',4,4' - benzophenone tetracarboxylic dianhydride.

Preferred polycarboxylic acids and anhydrides comprise the normally solid acids and anhydrides having a melting point between about 150°C and 250°C.

Outstanding results are obtained when trimellitic anhydride is employed as the epoxy curing agent, particularly when used as finely ground powder, preferably having an average particle size below 50 mm, more preferably about 30 m.

The amount of carboxyl-containing compound necessary for eventual curing of the composition may vary over a wide range, depending upon the epoxy compound employed, the particular acid or anhydride used and end use considerations.

A useful range is from about 0.25 to about 2.0 chemical equivalents of acid or anhydride per chemical equivalent of epoxy compound. An especially suitable range when trimellitic anhydride is employed with glycidyl polyethers of 2,2' - bis(4 - hydroxyphenyl) - propane is from 0.75 to 1.5 equivalents.

The epoxy curing accelerator (4) may be known per se. Onium compounds represent one class of preferred accelerators. Useful onium compounds include the onium salts utilized as esterification catalysts, and preferably those containing phosphorus, sulphur or nitrogen, such as, for example, the phosphonium, sulphonium, iodonium and ammonium salts of inorganic acids. Examples of these include, among others, ethyl triphenyl phosphonium iodide, tetrabutyl ammonium bromide, benzyltrimethylammonium sulphate, tetramethylammonium chloride, benzyltrimethylammonium nitrate, diphenyldimethylammonium chloride, benzyltrimethylammonium chloride, diphenyldimethylammonium nitrate, diphenylmethyl-sulphonium chloride, tricyclohexylsulphonium bromide; triphenylmethylphosphonium iodide, diethyl-dibutylphosphonium nitrate, trimethylsulphonium chloride, dicyclohexyldialkylphosphonium iodide, benzyltrimethylammonium thiocyanate, ethyl triphenylphosphonium acetate, and mixtures thereof, and commercial catalysts such as "BARQUAT MB-80" (trade mark) and "ADOGEN 464" (trade mark).

Especially preferred onium salts are the alkyl triphenylphosphonium halides such as ethyl triphenyl phosphonium iodide and quaternary ammonium halides such as tetrabutyl ammonium bromide, $C_{14-16}$ alkyl dimethylbenzyl ammonium chloride and methyl tri ($C_{8-10}$ alkyl) ammonium chloride.

As noted hereinbefore, the amount of onium salt can vary over a wide range, i.e., from about 0.001 to about 10.0 parts by weight per 100 parts by weight of the polyepoxide (phr). A very useful range is from about 0.005 to about 2.0 phr.

Suitable other accelerators which may be used alone or in combination with onium salts include the stannous salts of monocarboxylic acids, having at least 2 carbon atoms, and more preferably from about 6 to 12 carbon atoms. Examples of operable stannous salts include, stannous caproate, stannous octoate, stannous laurate, stannous palmitate, stannous stearate, stannous oleate and stannous naphthenate. Stannous octoate is particularly preferred.

The free-radical curing peroxide (5) may conveniently be a known epoxide or azo free-radical curing agent. Examples of peroxides include benzoyl peroxide, tertiary butyl hydroperoxide, ditertiary butyl peroxide, hydrogen peroxide, potassium persulphate, methyl cyclohexyl peroxide, cumene hydroperoxide, acetyl benzoyl peroxide, hydroperoxide of 1,2,3,4 - tetrahydro - naphthalene, phenylcyclohexane hydroperoxide, tertiary butyl peracetate, dicumyl peroxide, tertiary butyl perbenzoate, ditertiary amyl terephthalate, ditertiary butyl peradipate and tertiary amyl percarbonate. Particularly preferred catalysts include the dialkyl peroxides, tertiary alkyl hydroperoxides, alkyl esters of peroxycarboxylic acids and particularly those which contain no more than 18 carbon atoms per molecule and which have a half-life of at least one hour at 125°C.

An especially useful peroxide is 2,5 - dimethyl - 2,5 - bis(tertiarybutylperoxy)hexane.

It will be appreciated that the amount of free-radical curing agent will vary over a broad range depending upon the amount of the particular vinyl monomer used, type of peroxide or other free-radical curing agent and end-use properties desired. An effective or curing amount of free-radical curing agent may readily be assessed by one skilled in the art, who would simply adjust the amounts of a particular peroxide to suit his process conditions. Such adjustments are made in one or two trial runs knowing parameters such as temperatures and half-lives.

The invention also provides a process for preparing a formed article which comprises bringing a heat-curable composition according to the invention into a mould and curing by application of heat.

The present compositions may be prepared by various techniques. If, for example, the instant compositions are to be utilized within a short time, they can be prepared by simply mixing all the components, adding any customary additives such as fillers, reinforcement fibres, pigments, and/or flame retardant agents, and then moulding and curing the resulting composition.

Under certain conditions, it may be desirable to utilize a two-package system wherein an epoxy/unsaturated monomer blend is one package and the other package comprises the curing agents and accelerators. Under other conditions, it may be desirable to mix the epoxy curing agent-accelerators blend into the unsaturated monomer(s) for subsequent reaction with the polyepoxide in the presence of the peroxide. Another method comprises a two-package system wherein the unsaturated monomer(s), accelerator, and curing agent are in one package and the epoxy-peroxide mixture is in another package, the two packages being blended prior to use. Various other modifications will be apparent to one skilled in the art.

One special modification comprises mixing and dispersing the finely powdered anhydride into the unsaturated comonomer to form a paste, thereby reducing dust generation by handling of loose anhydride powder.

As noted hereinbefore, other materials may be mixed or added to compositions of the invention, including plasticizers, stabilizers, extenders, oils, resins, tars, asphalts, pigments, reinforcing agents, thixotropic agents and/or antioxidants.

The present compositions may be utilized in many applications such as for coatings and impregnating compositions, in the preparation of adhesives for metals, wood or cement, and in the preparation of reinforced composite products, such as laminated products, filament windings, sheet moulding compounds (SMC), electrical laminates, moulding powders, fluidized bed powders and potting compounds. A very suitable application is in the preparation of reinforced products and laminates wherein the compositions are applied to fibrous products such as glass fibres or sheets and the material formed into the desired object and cured.

In particular, the compositions are especially suitable for use in sheet moulding compositions (SMC), in structural applications such as automotive springs, bumpers and drive shafts, and in reaction injection moulding (RIM) applications.

The invention will be further understood from the following examples thereof, in which, unless otherwise indicated, parts and percentages are parts and percentages by weight.

Epoxy Resin A is a liquid glycidyl polyether of 2,2 - bis(4 - hydroxyphenyl)propane having an epoxide equivalent weight of 180—195 and an average molecular weight of about 380.

Epoxy Resin B is a liquid glycidyl polyether of 2,2 - bis(4 - hydroxyphenyl)propane having an epoxide equivalent weight of 190—210 and an average molecular weight of about 400.

BTDA is 3,3',4,4'-benzophenone tetracarboxylic dianhydride.

"LUPERSOL 101" (trademark) is 2,5-dimethyl-2,5-bis(t-butylperoxy)hexane.

TMA is trimellitic anhydride.

ETPPI is ethyl triphenyl phosphonium iodide.

DICUP is dicumyl peroxide.

TBPB is tertiary butyl peroxybenzoate.

TBAB is tetrabutyl ammonium bromide.

"BARQUAT MB-80" (trademark) is a long chain ($C_{14}$—$C_{16}$) alkyldimethyl benzyl ammonium chloride, 80% in alcohol.

PETA is pentaerythritol triacrylate.

TMPTMA is trimethylolpropane trimethacrylate.

BDMA is 1,3-butylene dimethacrylate.

BMA is n-butyl methacrylate.

IBMA is isobutyl methacrylate.

TTEGDMA is tetraethylene glycol dimethacrylate.

A464 is "ADOGEN 464" (trademark), a methyltrialkylammonium chloride such that the three alkyl groups have eight to ten carbon atoms each.

S is styrene.

SO is stannous octoate.

4

Example I

Trimellitic anhydride (150 grams) was combined in a 1 quart (946 ml) metal paint can with 1,3 - butylene dimethacrylate (300 grams) and "BARQUAT MB-80" (3 grams). This mixture (component B) was mixed with a rotary agitator for approximately 5 minutes until a pourable suspension was obtained. The suspension was allowed to stand overnight and then was combined with a mixture (component A) of 300 grams of Epoxy Resin B and 2 grams of "LUPERSOL 101". This mixture was mixed for approximately 5 minutes and then poured into a mould of glass sheets separated by a Teflon spacer 1/8" (0.32 cm) thick. Another portion was poured into aluminium moulds containing a linear cavity 1/2" (1.25 cm) square to form a bar. The sheet and bar moulds were placed in an oven at 150°C for two hours. The sheets and bars were then removed from the moulds, allowed to cool to ambient temperature (20°C), and tested for mechanical properties at ambient temperature (R.T.) and at 149°C. This procedure was essentially repeated wherein varying amounts of BDMA were used. The mechanical properties for five representative experiments are tabulated in Table I wherein the base formulations were as follows:

| Component A | Component B |
|---|---|
| Epoxy Resin B 300 grams | TMA 150 grams |
| "LUPERSOL 101" 2 grams | BDMA variable |
| | "BARQUAT MB-80" 3 grams |

TABLE I

| BDMA (phr)* | HDT 1—8 MPa (°C) | R.T. Flex strength MPa | R.T. Flex modulus, MPa | 149°C Flex strength, MPa | 149°C Flex modulus, MPa | R.T. Tensile strength, MPa | R.T. Tensile modulus, MPa | R.T. Tensile elongation, MPa | 149°C Tensile strength, MPa | 149°C Tensile modulus, MPa | 149°C Tensile elongation, % |
|---|---|---|---|---|---|---|---|---|---|---|---|
| 11.1 | 166 | 53 | 3440 | 50 | 1730 | 18 | 3480 | 0.6 | 26 | 1640 | 4.0 |
| 25 | 169 | 92 | 3510 | 50 | 1740 | 56 | 3250 | 2.1 | 27 | 1620 | 6.2 |
| 42.7 | 164 | 128 | 3520 | 54 | 1760 | 47 | 3910 | 1.4 | 29 | 1770 | 4.8 |
| 66.6 | 161 | 105 | 3520 | 58 | 1830 | 36 | 3270 | 1.2 | 32 | 1810 | 3.7 |
| 100 | 158 | 123 | 3560 | 61 | 1880 | 61 | 3330 | 2.3 | 28 | 1604 | 3.1 |

* Parts by weight per 100 parts of Epoxy Resin B

Example II

Trimellitic anhydride (45 grams) was combined in a jar with trimethylolpropane trimethacrylate (54 grams) and the mixture was blended for approximately 5 minutes with a rotary agitator until a pourable suspension was obtained. To the suspension were added 300 g of Epoxy Resin B, 3 g of stannous octoate and 1.5 g of "LUPERSOL 101". This mixture was mixed for approximately 5 minutes and then poured into moulds as in Example I. The moulds were placed in an oven at 150°C for 2 hours for curing. The casting samples had a heat deflection temperature (at 1.8 MPa) of 139°C, ambient temperature flexural strength and modulus of 106 MPa and 3390 MPa respectively, and flexural strength and modulus at 149°C of 28 MPa and 870 MPa respectively.

Example III

The procedures of Examples I and II were essentially repeated using Epoxy Resin A, varying amounts of BMA and IBMA, TBAB as epoxy curing accelerator and as anhydride BTDA. The amounts of BMA and IBMA are in phr (parts per hundred) based on 100 parts of Epoxy Resin A. All samples were cured at 150°C for two hours.

Representative experimental runs are tabulated in Table II.

Example IV

The procedures of Example III were essentially repeated wherein various amounts of BMA or a blend of BMA and TMPTMA were utilized. The results are tabulated in Table III.

Example V

The procedures of Examples I to IV were repeated using the following base formulation:

| Epoxy Resin A or B | 300 grams |
| Trimellitic Anhydride | 150 grams |
| ETPPI or TBAB | 1.5 grams |
| Monomer(s) | variable |
| LUPERSOL 101 | 0.6 grams |

Epoxy Resin A was used when TBAB was used and Epoxy Resin B was used with ETPPI.

Representative laboratory runs are tabulated in Table IV.

Example VI

The procedures of the Examples I to V were repeated using various miscellaneous monomers according to the following basic formulation:

| Epoxy Resin B | 300 grams |
| TMA | 150 grams |
| Monomer | Variable |
| ETPPI | 0.75 grams |
| LUPERSOL 101 | Variable |

The cure cycle was 2 hrs. at 150°C.

The results of representative laboratory experiments are tabulated in Table V.

Example VII

The procedures of Examples I to VI were repeated using various monomers, giving the results tabulated in Table VI. The following basic formulation was used:

| Epoxy Resin A or B | 300 grams |
| Trimellitic Anhydride | 150 grams |
| Monomer | Variable |
| Quaternary compound | Variable |
| LUPERSOL 101 | Variable |

Epoxy Resin A was used when TBAB was employed; in other cases Epoxy Resin B was used.

7

TABLE II

| Experiment No. | BTDA (phr) | Monomer (phr) | Catalyst/ initiator (phr) | Visc. 20°C (Pa.s) | HDT, 1.8 MPa (°C) | R.T. flex str., MPa | R.T. flex mod., MPa | 149°C flex str., MPa |
|---|---|---|---|---|---|---|---|---|
| 1 | 70 | BMA(30) | TBAB(0.5) L101(0.2) | 3.03 | (a) | 28 | 2820 | 7 |
| 2 | 75 | BMA(30) | TBAB(0.5) L101(0.2) | 4.25 | 218 | 21 | 1470 | 10 |
| 3 | 80 | BMA(30) | TBAB(0.5) L101(0.2) | 5.03 | 210 | 25 | 3010 | 9 |
| 4 | 85.6 | IBMA(25) | TBAB(0.5) L101(0.2) | | 193, 197 | | | |
| 5 | 85.6 | BMA(30) | TBAB(0.5) L101(0.2) | | . 186 | 43 | 2950 | 24[b] |

[a] HDT bars broke during testing;
[b] Values determined at 121°C instead of 149°C.

TABLE II (Cont'd)

| Experiment No. | 149°C flex mod., MPa | R.T. ten. str., MPa | R.T. ten. mod., MPa | R.T. ten. elong., (%) | 149°C ten. str., MPa | 149°C ten. mod., MPa | 149°C ten. elong., (%) | Tg, °C rheometrics disp. phase (resin phase) |
|---|---|---|---|---|---|---|---|---|
| 1 | 1090 | 14 | 3140 | 0.5 | 5.3 | 1150 | 0.5 | (>230) |
| 2 | 1280 | 14 | 3090 | 0.5 | 5.4 | 1210 | 0.5 | (>230) |
| 3 | 1420 | 13 | 2890 | 0.5 | 4.5 | 1270 | 0.4 | (>230) |
| 4 | | | | | | | | |
| 5 | 1360[b] | 30 | 2820 | 1.3 | 17[b] | 1330[b] | 1.6[b] | |

[a] HDT bars broke during testing;
[b] Values determined at 121°C instead of 149°C.

TABLE III

| Experiment No. | BTDA (phr) | Monomer (phr) | Catalyst/ initiator (phr) | Visc. 20°C (Pa.s) | HDT 1.8 MPa (°C) | R.T. flex str., MPa | R.T. flex mod., MPa |
|---|---|---|---|---|---|---|---|
| 1 | 85.6 | BMA(11.1) | TBAB(0.5) L101(0.33) | 26.0 | 225, 237 | 48 | 3590 |
| 2 | 85.6 | BMA(25) | TBAB(0.5) L101(0.33) | 17.5 | 218, 219 | 25 | 2910 |
| 3 | 85.6 | BMA(42.8) | TBAB(0.5) L101(0.33) | 7.8 | 208, 215 | 27 | 2650 |
| 4 | 85.6 | BMA(66.7) | TBAB(0.5) L101(0.33) | 2.8 | 176, 184 | 48 | 1870 |
| 5 | 85.6 | BMA(100) | TBAB(0.5) L101(0.33) | 1.5 | 71, 74 | 26 | 870 |
| 6 | 85.6 | BMA(50) TMPTMA(50) | TBAB(0.5) L101(0.33) | 4.85 | 187 | | |

TABLE III (Cont'd)

| Experiment No. | 149°C flex str., MPa | 149°C flex mod., MPa | R.T. ten. str., MPa | R.T. ten. mod., MPa | R.T. ten. elong., (%) | 149°C ten. str., MPa | 149°C ten. mod., MPa | 149°C ten. elong., (%) |
|---|---|---|---|---|---|---|---|---|
| 1 | 21 | 2030 | 19 | 3810 | 0.5 | 16 | 1960 | 0.9 |
| 2 | 18 | 1690 | 14 | 2770 | 0.5 | 7 | 1560 | 0.5 |
| 3 | 16 | 1410 | 22 | 2380 | 0.9 | 10 | 1370 | 0.7 |
| 4 | 20 | 920 | 26 | 1800 | 1.6 | 11 | 970 | 1.3 |
| 5 | 10 | 390 | 15 | 840 | 2.3 | 6 | 410 | 1.9 |

TABLE IV

| Experiment No. | Monomers (phr) | Catalysts (phr) | Initial viscosity Pa.s | HDT 1.8 MPa (°C) | R.T. flex str., MPa | R.T. flex mod., MPa | 149°C flex str., MPa |
|---|---|---|---|---|---|---|---|
| 1 | IBMA(25) | ETPPI(0.5), L101(0.2) | | 158.5, 160 | | | |
| 2 | IBMA(20), TTEGDMA(5) | TBAB(1), L101(0.5) | | 157.4 | | | |
| 3 | IBMA(20), PETA(5) | ETPPI(0.5), L101(0.2) | | 159, 159.5 | | | |
| 4 | IBMA(15), PETA(10) | ETPPI(0.5), L101(0.2) | | 174.6, 178.6 | | | |
| 5 | IBMA(10), PETA(15) | ETPPI(0.5), L101(0.2) | | 185.1, 184.6 | | | |
| 6 | IBMA(5), PETA(20) | ETPPI(0.5), L101(0.2) | | 177.7, 183.6 | | | |
| 7 | PETA(25) | ETPPI(0.5), L101(0.2) | | 177.8, 177.5 | | | |
| 8 | BMA(25) | TBAB(0.5), L101(0.2) | 0.85 | 122 | 96 | 2650 | 42 |
| 9 | BMA(20), TMPTMA(5) | TBAB(0.5), L101(0.2) | 1.04 | 131 | 122 | 3110 | 43 |
| 10 | BMA(20), PETA(5) | TBAB(0.5), L101(0.2) | 1.11 | 140 | 105 | 2930 | 52 |
| 11 | BMA(15), TMPTMA(10) | TBAB(0.5), L101(0.2) | 2.5 | 143 | 94 | 3230 | 56 |
| 12 | BMA(15), PETA(10) | TBAB(0.5), L101(0.2) | 3.8 | 178 | 114 | 3080 | 63 |
| 13 | BMA(10), TMPTMA(15) | TBAB(0.5), L101(0.2) | 7.3 | 167 | 106 | 3290 | 67 |

TABLE IV (Cont'd)

| Experiment No. | 149°C flex mod., MPa | R.T. tensile str., MPa | R.T. tensile mod., MPa | R.T. tensile elong., % | 149°C tensile str., MPa | 149°C tensile mod., MPa | 149°C tensile elong., % |
|---|---|---|---|---|---|---|---|
| 1 | | | | | | | |
| 2 | | | | | | | |
| 3 | | | | | | | |
| 4 | | | | | | | |
| 5 | | | | | | | |
| 6 | | | | | | | |
| 7 | | | | | | | |
| 8 | 1280 | 73 | 2930 | 4.7 | 19 | 1030 | 5.5 |
| 9 | 1230 | 68 | 3020 | 3.9 | 23 | 1120 | 6.3 |
| 10 | 1380 | 43 | 3120 | 1.6 | 26 | 1590 | 5.5 |
| 11 | 1600 | 57 | 2510 | 4.6 | 27 | 1380 | 5.5 |
| 12 | 1810 | 66 | 2840 | 4.3 | 32 | 1560 | 4.9 |
| 13 | 1940 | 54 | 2860 | 2.7 | 33 | 1660 | 3.9 |

TABLE V

| Experiment No. | Monomer | Resin/ monomer w/w | LUPERSOL 101 (g/100 g resin) | HDT 1.8 MPa (°C) | R.T. flex str., MPa | R.T. flex mod., MPa | 149°C flex str., MPa |
|---|---|---|---|---|---|---|---|
| 1 | Isoprene | 90/10 | 0.2 | 171, 169 | (a) | | |
| 2 | Isoprene | 80/20 | 0.2 | 167, 169 | (a) | | |
| 3 | Diallyl Phthalate | 90/10 | 0.2 | 135, 140.5 | 87 | 3470 | 24.3 |
| 4 | Diallyl Phthalate | 80/20 | 0.2 | 105, 109 | 82 | 3440 | 4.7 |
| 5 | Diallyl Phthalate | 90/10 | 0.6 | 150, 152 | 91 | 3580 | 32.8 |
| 6 | Diallyl Phthalate | 80/20 | 1.2 | 136.5, 137 | 129 | 3620 | 24.2 |
| 7 | Diallyl Phthalate | 90/10 | 1.1 | 153, 154 | 115 | 3470 | |
| 8 | Diallyl Phthalate | 80/20 | 2.5 | 147, 150 | 121 | 3490 | |

a) casting not prepared because of volatility of monomer.

TABLE V (Cont'd)

| Experiment No. | 149°C flex mod., MPa | R.T. tensile str., MPa | R.T. tensile modulus MPa | R.T. tensile elong., % | 149°C tensile str., (MPa) | 149°C tensile mod., (MPa) | 149°C tensile elong., % | Tg., °C Rheometrics disperse phase (resin phase) |
|---|---|---|---|---|---|---|---|---|
| 1 | | | | | | | | |
| 2 | | | | | | | | |
| 3 | 858 | 63.5 | 3440 | 2.5 | 13.6 | 681 | 8.1 | 96, 162 |
| 4 | 78 | 61.3 | 3200 | 2.9 | 29 | 48.3 | 6.8 | 70, 150 |
| 5 | 1160 | 53.3 | 3190 | 1.9 | | | | 100, 170 |
| 6 | 905 | 64.4 | 3320 | 2.7 | 13.5 | 592 | 13.1 | 95, 170 |
| 7 | | 47.0 | 3330 | 1.7 | | | | |
| 8 | | 75.6 | 3300 | 3.4 | | | | |

TABLE VI

| Experiment No. | Monomer | Resin/monomer (w/w) | Catalysts (phr) | HDT 1.8 MPa °C | R.T. flex str. MPa | R.T. flex mod. MPa | 149°C flex str. MPa |
|---|---|---|---|---|---|---|---|
| 1 | Methyl Methacrylate | 90/10 | ETPPI(0.5), L101(0.2) | 167, 167 | | | |
| 2 | Methyl Methacrylate | 80/20 | ETPPI(0.5), L101(0.2) | 165, 168 | | | |
| 3 | Butyl Acrylate | 80/20 | TBAB(0.5), L101(0.5) | 176 | 82 | 2440 | 53 |
| 4 | Butyl Acrylate | 90/10 | ETPPI(0.5), L101(0.2) | | 76 | 3120 | |
| 5 | Butyl Acrylate | 90/10 | ETPPI(0.5), L101(0.2) | 172, 175 | | | |
| 6 | Butyl Acrylate | 80/20 | ETPPI(0.5), L101(0.2) | 157, 159 | | | |
| 7 | Butyl Acrylate | 80/20 | ETPPI(0.5), L101(0.2) | 173, 174 | | | |
| 8 | Butyl Acrylate | 80/20 | ETPPI(0.5), L101(0.2) | | 101 | 2560 | |
| 9 | Isobutyl Methacrylate | 80/20 | ETPPI(0.5), L101(0.2) | 159, 160 | | | |
| 10 | Isobutyl Methacrylate | 80/20 | TBAB(0.5), L101(0.5) | 155 | 92 | 2760 | 42 |
| 11 | Isobutyl Methacrylate | 80/20 | A464(1.0), L101(0.2) | 148 | 94 | 2580 | 37 |
| 12 | Butyl Methacrylate | 90/10 | TBAB(0.5), L101(0.33) | 163, 164 | 107 | 3080 | 47 |
| 13 | Butyl Methacrylate | 80/20 | TBAB(0.5), L101(0.33) | 161, 165 | 98 | 2880 | 23 |
| 14 | Butyl Methacrylate | 70/30 | TBAB(0.5), L101(0.33) | 158, 161 | 80 | 4040 | |
| 15 | Butyl Methacrylate | 60/40 | TBAB(0.5), L101(0.33) | 152, 153 | 59 | 1661 | 22 |

TABLE VI (Cont'd)

| Experiment No. | Monomer | Resin/ monomer (w/w) | Catalysts (phr) | HDT 1.8 MPa °C | R.T. flex str. MPa | R.T. flex mod. MPa | 149°C flex str. MPa |
|---|---|---|---|---|---|---|---|
| 16 | Butyl Methacrylate | 50/50 | TBAB(0.5), L101(0.33) | 142, 143 | 30 | 1124 | 15 |
| 17 | Butyl Methacrylate/ Trimethylolpropane Trimethacrylate (1:1) | 50/50 | TBAB(0.5), L101(0.33) | 145, 152 | 93 | 2640 | 30 |
| 18 | Isodecyl Methacrylate | 80/20 | ETPPI(0.5), L101(0.2) | 147 | 65 | 2440 | 40 |
| 19 | Isodecyl Methacrylate | 80/20 | ETPPI(0.5), L101(0.2) | 163 | 55 | 2700 | 41 |
| 20 | Dodecyl Methacrylate | 80/20 | ETPPI(0.5), L101(0.2) | 166 | 49 | 2190 | 35 |
| 21 | Dodecyl Methacrylate | 80/20 | ETPPI(0.5), L101(0.2) | 170 | 52 | 2680 | 41 |
| 22 | Acrylonitrile | 90/10 | ETPPI(0.5), L101(0.2) | 163, 164 | | | |
| 23 | Acrylonitrile | 80/20 | ETPPI(0.5), L101(0.2) | 137, 138 | | | |
| 24 | Acrylonitrile | 90/10 | ETPPI(0.5), L101(1.0) | 167, 168 | | | |
| 25 | Acrylonitrile | 80/20 | ETPPI(0.5), L101(1.0) | 161, 165 | | | |

TABLE VI (Cont'd)

| Experiment No. | 149°C flex mod., MPa | R.T. ten., str. MPa | R.T. ten., mod. MPa | R.T. ten., elong. % | 149°C ten., str. MPa | 149°C ten., mod. MPa | 149°C ten., elong. % | Notched izod., J/M |
|---|---|---|---|---|---|---|---|---|
| 1 | | | | | | | | |
| 2 | | | | | | | | |
| 3 | 1550 | 42 | 2420 | 2.3 | 26 | 1430 | 3.6, 3.8 | |
| 4 | | 43 | 2900 | 1.7 | | | | |
| 5 | | | | | | | | |
| 6 | | | | | | | | |
| 7 | | | | | | | | |
| 8 | | 52 | 2270 | 4.2 | | | | |
| 9 | | | | | | | | |
| 10 | 1480 | 54 | 2770 | 3.1 | 20 | 1200 | 3.7, 5.4 | |
| 11 | 1050 | 39 | 2430 | 2.4 | 17 | 1040 | 6.2 | |
| 12 | 1430 | 39 | 3040 | 1.5 | 22 | 1240 | 3.5 | 22 |
| 13 | 657 | 48 | 2400 | 3.3 | 10 | 355 | 7.1 | 26 |
| 14 | | 53 | 2130 | 5.0 | | | | 24 |
| 15 | 601 | 31 | 1680 | 2.5 | | | | 17 |

TABLE VI (Cont'd)

| Experiment No. | 149°C flex mod., MPa | R.T. ten., str. MPa | R.T. ten., mod. MPa | R.T. ten., elong. % | 149°C ten., str. MPa | 149°C ten., mod. MPa | 149°C ten., elong. % | Notched izod., J/M |
|---|---|---|---|---|---|---|---|---|
| 16 | 459 | 20 | 1230 | 1.9 | 12 | 520 | 7.1 | 17 |
| 17 | 807 | 43 | 2500 | 2.3 | 7.6 | 305 | 5.2 | 19 |
| 18 | 1340 | 55 | 2360 | 4.8 | 22 | 1220 | 3.5 | |
| 19 | 1600 | 30 | 2460 | 1.4 | | | | |
| 20 | 1360 | 13 | 2070 | 0.6 | 17 | 1150 | 2.0 | |
| 21 | 1590 | 34 | 2400 | 1.6 | 24 | 1470 | 2.2 | |
| 22 | | | | | | | | |
| 23 | | | | | | | | |
| 24 | | | | | | | | |
| 25 | | | | | | | | |

Example VIII

Into a 1 quart (946 ml) metal paint can were placed 285 grams of Epoxy Resin B, 150 grams of finely ground TMA powder (average particle size of 30 μ), 15 grams of a 10% wt solution of TBAB in Epoxy Resin A, 120 grams of styrene, 180 grams of TMPTMA and 1 gram of "LUPERSOL 101". These were thoroughly mixed for 5 to 10 minutes. A portion of the mixture was poured into a mould made of glass sheets separated by a Teflon spacer 1/8" (0.32 cm) thick. Another portion was poured into aluminium moulds containing a linear cavity 1/2" (1.25 cm) square to form a bar. The sheet and bar moulds were placed in an oven at 150°C for two hours. The sheets and bars were then removed from the moulds and tested for mechanical properties. This procedure was essentially repeated wherein various acrylic comonomers were used with varying amounts of styrene. The resulting data is tabulated in Table VII.

TABLE VII

| Experiment No. | Monomers (wt. ratio) | Epoxy resin total monomers (w/w) | R.T. Init. visc. MPa · S | H.D.T. 1.8 MPa °C | R.T. Flex str. MPa | R.T. Flex mod. MPa | 149°C Flex str. MPa |
|---|---|---|---|---|---|---|---|
| 1 | S:BMA(80:20) | 80/20 | 2000 | 165, 167 | 100 | 3340 | 47 |
| 2 | S:BMA(60:40) | 80/20 | 1400 | 159, 161 | 104 | 3060 | 39 |
| 3 | S:IBMA(60:40) | 80/20 | 1240 | 160, 162 | 87 | 3030 | 40 |
| 4 | S:BMA(40:60) | 80/20 | 688 | 161, 164 | 116 | 3280 | 48 |
| 5 | S:BMA(20:80) | 80/20 | 608 | 159, 159 | 112 | 3070 | 37 |
| 6 | S:IBMA(20:80) | 80/20 | | 164, 165 | 94 | 3060 | 38 |
| 7 | S:BMA(40:60) | 90/10 | 4250 | 165, 165 | 72 | 3150 | 45 |
| 8 | S:BMA(40:60) | 80/20 | 688 | 161, 164 | 116 | 3280 | 48 |
| 9 | S:BMA(40:60) | 70/30 | 225 | 159, 162 | 95 | 2540 | 36 |
| 10 | S:IBMA(40:60) | 70/30 | 54 | 144, 151 | 92 | 2620 | 23 |
| 11 | S:TMPTMA(40:60) | 50/50 | 301 | 183, 184 | 95 | 3680 | 60 |
| 12 | S:BMA:TMPTMA (40:30:30) | 50/50 | 63 | 134 | 44 | 2480 | 38 |

TABLE VII (Cont'd)

| Experiment No. | 149°C flex mod., MPa | R.T. ten., str. MPa | R.T. ten., mod. MPa | R.T. ten., elong. % | 149°C ten., str. MPa | 149°C ten., mod. MPa | 149°C ten., elong. % | Notched izod., J/M |
|---|---|---|---|---|---|---|---|---|
| 1 | 1390 | 59 | 2330 | 2.6 | 25 | 1320 | 4.8 | |
| 2 | 1150 | 62 | 3080 | 3.3 | 21 | 1120 | 5.5 | 29 |
| 3 | 1260 | 49 | 3210 | 1.9 | 22 | 1180 | 4.6 | 26 |
| 4 | 1350 | 60 | 2950 | 2.9 | 23 | 1230 | 5.9 | 27 |
| 5 | 1100 | 53 | 2860 | 2.5 | 19 | 1040 | 6.6 | 27 |
| 6 | 1210 | 61 | 3380 | 2.7 | 21 | 1200 | 6.0 | 26 |
| 7 | 1490 | 46 | 2980 | 1.7 | 26 | 1470 | 3.6 | 30 |
| 8 | 1350 | 60 | 2950 | 2.9 | 23 | 1230 | 5.9 | 27 |
| 9 | 1110 | 52 | 2410 | 3.6 | 18 | 943 | 7.8 | 25 |
| 10 | 690 | 52 | 2670 | 5.2 | 6.1 | 320 | 6.9 | 25 |
| 11 | 2230 | 55 | 3680 | 1.7 | 37 | 2070 | 3.7 | |
| 12 | 1240 | 42 | 3050 | 1.6 | 19 | 1020 | 4.6 | |

Example IX

The procedures of Example VIII were essentially repeated wherein pentaerythritol triacrylate (PETA) is used together with styrene (S). The results are tabulated in Table VIII.

TABLE VIII

| Experiment No. | Monomers (wt ratio) | Resin/ monomer (w/w | Peroxide (g/100 g resin) | HDT 1.8 MPa (°C) | R.T. flex str. MPa | R.T. flex mod. MPa | R.T. tensile strength MPa | R.T. tensile modulus MPa | R.T. tensile elongation (%) | Notched izod, J/M |
|---|---|---|---|---|---|---|---|---|---|---|
| 1 | S/PETA | 90/10 | 0.2 | 171, 172 | 129 | 3130 | 68.4 | 3150 | 2.9 | 29.3 |
| 2 | S/PETA (94.5/5.5) | 80/20 | 0.2 | 171, 170 | 131 | 3200 | 78.1 | 3170 | 3.9 | 30.0 |
| 3 | S/PETA (91/9) | 80/20 | 0.2 | | 120 | 3360 | 75.2 | 2960 | 3.9 | 26.3 |

# 0 096 906

Example X

The procedures of Example VIII were essentially repeated wherein acrylonitrile (ACN) or acrylonitrile/butyl acrylate (ACN/BA) is blended with styrene. The results are tabulated in Table IX. The basic formulation was as follows:

| Epoxy Resin B | 300 pbw |
| ETPPI | 1.5 pbw |
| TMA | 150 pbw |
| Monomer(s) | Variable |
| Peroxide ("LUPERSOL 101") | Variable |

TABLE IX

| Experiment Number | Monomers | Resin/monomer (w/w) | Peroxide (g/100 g resin) | HDT (1.8 MPa) (°C) |
|---|---|---|---|---|
| 1 | Styrene/Acrylonitrile (76/24) | 90/10 | 0.2 | 169, 170 |
| 2 | Styrene/Acrylonitrile (76/24) | 80/20 | 0.2 | 168, 168 |
| 3 | (Styrene/Butyl | 90/10 | 0.2 | 167, 168.5 |
| 4 | (Acrylate | 80/20 | 0.2 | 158.5, 164 |
| 5 | (Acrylonitrile | 90/10 | 1.0 | 171, 168 |
| 6 | ((52/24/24) | 80/20 | 1.0 | 161, 162 |

Example XI

This example illustrates the preparation of a blend of epoxy and styrene-acrylic polymers with the epoxy curing agent and onium compound predispersed in the acrylic monomer. Trimellitic anhydride (150 g) was combined in a 1-quart (946 ml) paint can with 1,3-butylene dimethacrylate (BDMA) (105 g) and 3 g of an 80% (wt/wt) solution in ethanol of a mixture of alkyl dimethyl benzyl ammonium chlorides (alkyl groups: $C_{12}$ 40%, $C_{14}$ 50%, $C_{16}$ 10%) sold under the trade mark "BARQUAT MB-80". This mixture (component B) was mixed with a rotary agitator for approximately 5 minutes until a pourable suspension was obtained. The suspension was allowed to stand overnight and then was combined with a mixture (component A) of 300 g of Epoxy Resin B, 45 g of styrene and 2 g of "LUPERSOL 101". This mixture was mixed for approximately 5 minutes; entrained air bubbles were allowed to rise to the top and the viscosity was measured with a Brookfield viscometer. The mixture was then poured into moulds as in Examples I and VIII and the molds were placed in an oven at 150°C for 2 hours for curing.

Further experiments were run with different amounts of BDMA and styrene monomers and cured by the same procedure. Mechanical properties are shown in Table X.

22

TABLE X

| Experiment No. | Monomers (phr) | Init. visc. Pa·s | HDT 1.8 MPa (°C) | R.T. flex str., MPa | R.T. flex mod., MPa | 149°C flex str., MPa | 149°C flex mod., MPa | R.T. ten. str., MPa | R.T. ten. mod., MPa | R.T. ten. elon., (%) | 149°C ten. str., MPa | 149°C ten. mod., MPa | 149°C ten. elong., (%) |
|---|---|---|---|---|---|---|---|---|---|---|---|---|---|
| 1 | BDMA(35) Styrene(15) | 0.55 | 163 | 134 | 3520 | 59 | 2000 | 52 | 2900 | 3.4 | 23 | 1680 | 7.8 |
| 2 | BDMA(35) Styrene(30) | 0.15 | 164 | 100 | 2820 | 59 | 1980 | 47 | 2890 | 3.4 | 24 | 1630 | 7.7 |
| 3 | BDMA(35) Styrene(45) | 0.083 | 156 | 114 | 3450 | 47 | 1690 | 49 | 3150 | 2.6 | 19 | 1290 | 8.8 |
| 4 | BDMA(45) Styrene(15) | 0.326 | 168 | 103 | 2980 | 56 | 2010 | 62 | 2930 | 2.8 | 28 | 1680 | 5.0 |
| 5 | BDMA(45) Styrene(30) | 0.12 | | 116 | 3450 | 63 | 1580 | 43 | 3280 | 1.5 | 36 | 2090 | 2.8 |
| 6 | BDMA(45) Styrene(45) | 0.060 | 157 | 114 | 3430 | 52 | 1700 | 65 | 3120 | 3.0 | 24 | 1670 | 9.4 |

Example XII

The procedures of Example XI were followed using trimethylolpropane triacrylate (TMPTA) and trimethylolpropane trimethacrylate (TMPTMA) as the acrylic monomers in which the TMA was suspended. The amount of "LUPERSOL 101" used was raised to 3 g. Heat deflection temperatures for bars cast from the resulting epoxy/styrene-acrylic blends are shown in Table XI.

TABLE XI

| Experiment Number | Monomers (phr) | Initial viscosity Pa.s | HDT, 1.8 MPa (°C) |
|---|---|---|---|
| 1 | TMPTMA(83), Styrene(30) | 0.19 | 177 |
| 2 | TMPTMA(83), Styrene(60) | 0.055 | 177 |
| 3 | TMPTMA(83), Styrene(90) | 0.026 | 170 |
| 4 | TMPTMA(60), Styrene(10) | 1.14 | 171 |
| 5 | TMPTMA(60), Styrene(70) | 0.040 | 171 |
| 6 | TMPTA(50), Styrene(15) | 0.15 | 170 |
| 7 | TMPTA(50), Styrene(45) | 0.10 | 171 |
| 8 | TMPTA(50), Styrene(75) | 0.036 | 162 |
| 9 | TMPTA(70), Styrene(15) | 0.68 | 176 |
| 10 | TMPTA(70), Styrene(45) | 0.15 | 171 |

Example XIII

257 g of benzophenonetetracarboxylic dianhydride (BTDA) were mixed with 38.5 g butyl methacrylate and 90 g styrene to make a wetted powder (component A) which was allowed to stand for two days. The powder was then mixed with a mixture of 300 g of Epoxy Resin B, 1.5 g of TBAB and 1 g of "LUPERSOL 101" (component B); the mixture was stirred for approximately 5 minutes, poured into moulds as in Examples I and VIII, and cured for 2 hours at 150°C. Mechanical properties of this sample and another prepared similarly are shown in Table XII.

TABLE XII

| Experiment No. | Momomers (phr) | Init. visc. Pa.s | HDT 1.8 MPa (°C) | R.T. flex str., MPa | R.T. flex mod., MPa | 149°C flex str., MPa | 149°C flex mod., MPa | R.T. ten. str., MPa | R.T. ten. mod., MPa | R.T. ten. elong., (%) | 149°C ten. str., MPa | 149°C ten., mod., MPa | 149°C ten., elong., (%) |
|---|---|---|---|---|---|---|---|---|---|---|---|---|---|
| 1 | BMA(12.8) Styrene(30) | 3.32 | 196 | 38 | 3360 | 12.6 | 940 | 21 | 3470 | 0.6 | 7.0 | 900 | 0.8 |
| 2 | BMA(30) Styrene(76.7) | 2.50 | 124 | 43 | 3360 | 11.2 | 700 | 17 | 3300 | 0.6 | 5.8 | 650 | 0.8 |

Example XIV

Trimellitic anhydride (45 g) was mixed with trimethylolpropane trimethacrylate (54 g) to form a pourable suspension (component B). This mixture was then mixed with a mixture of 300 g Epoxy Resin B, 45 g styrene, 3 g stannous octoate and 1.5 g "LUPERSOL 101" (component A). Components A and B were mixed together for approximately 5 minutes and the resultant mixture was poured into molds as in Examples I and VIII and cured for 2 hours at 150°C. Mechanical properties for cast specimens of this and other compositions made using the above procedure are shown in Table XIII.

TABLE XIII

| Experiment No. | Monomers (phr) | Init. visc. Pa.s | HDT 1.8 MPa (°C) | R.T. flex str., MPa | R.T. flex mod., MPa | 149°C flex str., MPa | 149°C ten. mod., MPa | 149°C ten. str., MPa | 149°C ten. mod., MPa | 149°C ten. elong. (%) |
|---|---|---|---|---|---|---|---|---|---|---|
| 1 | TMPTMA(18) Styrene(5) | 4.25 | 152 | | | 34 | 1150 | 16 | 984 | 6.4 |
| 2 | TMPTMA(18) Styrene(10) | 1.32 | 157 | 105 | 3350 | 52 | 1650 | | | |
| 3 | TMPTMA(18) | 0.65 | 153 | | | 48 | 1400 | 24 | 1550 | 4.6 |

0 906 906

Example XV

This example illustrates the use of stannous octoate as the accelerator in an epoxy-styrene/trimethylolpropane trimethacrylate (TMPTMA) blend. The basic formulation is as follows:

| Component A | Component B |
|---|---|
| Epoxy Resin A 100 pbw | TMA—15 pbw |
| Stannous Octoate (SO) 1 pbw | TMPTMA—18 pbw |
| "LUPERSOL 101" (L101) Variable Styrene Variable | |

The procedures used in Example XII were employed and the results are tabulated in Table XIV.

TABLE XIV

| Experiment No. | Monomers (phr) | Catalysts, phr | Init. mix. visc. R.T. (Pa.s) | Gel time, 150°C cure plate sec. | HDT 1.8 MPa (°C) | R.T. flex str., MPa | R.T. flex mod., MPa | 149°C flex str., MPa | 149°C flex mod., MPa | 149°C ten. str., MPa | 149°C ten. mod., MPa | 149°C ten. elong., (%) | Dyn. Mech. Data | |
|---|---|---|---|---|---|---|---|---|---|---|---|---|---|---|
| | | | | | | | | | | | | | Tg°C (tan G, peak) | Temp. for G' 300 MPa (°C) |
| 1 | TMPTMA(18) | SO(1) L101(0.5) | 12.72 | 45 | 139 | 106 | 3390 | 28 | 870 | 16 | 820 | 5.7 | 161 | 147 |
| 2 | TMPTMA(18) Styrene(5) | SO(1) L101(0.5) | 4.25 | 54 | 152 | | | 34 | 1150 | 16 | 980 | 6.4 | 170 | 152 |
| 3 | TMPTMA(18) Styrene(10) | SO(1) L101(0.5) | 1.32 | 61 | 157 | 105 | 3350 | 52 | 1670 | | | | 180 | 169 |
| 4 | TMPTMA(18) Styrene(10) | SO(1) L101(0.5) | 0.645 | 57 | 153 | | | 48 | 1400 | 24 | 1550 | 4.6 | 160 | 171 |

**Claims**

1. A heat-curable composition comprising:

(1) from 30 to 99 parts of an epoxy compound having on average more than one epoxy group per molecule,

(2) from 1 to 70 parts by weight of a polyacrylate or polymethacrylate ester of a polyol or of a blend of polyacrylate or polymethacrylate ester of a polyol with styrene,

(3) from 0.25 to 2.0 stoichiometric equivalents, based on the epoxy resin of a polycarboxylic acid anhydride,

(4) an accelerating amount of at least one epoxy curing accelerator, being an onium compound or a stannous salt of a monocarboxylic acid,

(5) a curing amount of an organic peroxide.

2. A composition according to claim 1, wherein the epoxy compound is a glycidyl polyether of a polyhydric phenol or a hydrogenated polyhydric phenol.

3. A composition according to claim 2 wherein the polyhydric phenol is 2,2 - bis(4 - hydroxyphenyl)propane.

4. A composition according to any one of claims 1 to 3 wherein the acid anhydride is trimellitic anhydride or 3,3',4,4' - benzophenone tetracarboxylic dianhydride.

5. A composition according to any one of claims 1 to 4 wherein the epoxy curing accelerator is ethyl triphenyl phosphonium iodide or stannous octoate.

**Patentansprüche**

1. Heiß härtbare Masse, umfassend

(1) 30 bis 99 Teile einer Epoxyverbindung, die im Mittel mehr als eine Epoxygruppe im Molekül enthält,

(2) 1 bis 70 Gew.-% eines Polyacrylat- oder Polymetacrylatesters von einem Polyol oder eines Gemisches von Polyacrylat- oder Polymetacrylatestern eines Polyols mit Styrol,

(3) 0,25 bis 2,0 stöchiometrische Äquivalent, bezogen auf das Epoxyharz eines Polycarbonsäureanhydrids,

(4) eine beschleunigende Menge zumindest eines Härtungsbeschleunigers für Epoxy(harze), der eine Oniumverbindung oder ein Zinn-II-Salz einer Monocarbonsäure ist (und)

(5) eine härtende Menge eines organischen Peroxids.

2. Masse nach Anspruch 1, wobei die Epoxyverbindung ein Glycidylpolyether eines mehrwertigen Phenols oder eines hydrierten mehrwertigen Phenols ist.

3. Masse nach Anspruch 2, wobei das mehrwertige Phenol 2,2 - Bis(4 - hydroxyphenyl)propan ist.

4. Masse nach einem der Ansprüche 1 bis 3, wobei das Säureanhydrid Trimellitsäureanhydrid oder 3,3',4,4' - Benzophenontetracarbonsäure - dianhydrid ist.

5. Masse nach einem der Ansprüche 1 bis 4, wobei der Epoxyhärtungsbeschleuniger Ethyltriphenylphosphoniumiodid oder Zinn-II-Octoat ist.

**Revendications**

1. Composition thermodurcissable comprenant:

(1) de 30 à 99 parties d'un composé époxy ayant en moyenne plus d'un groupe époxy par molécule,

(2) de 1 à 70 parties en poids d'un ester de polyacrylate ou de polyméthacrylate d'un polyol ou d'un mélange d'esters de polyacrylate ou de polyméthacrylate d'un polyol avec du styrène,

(3) de 0,25 à 2,0 équivalents stoechiométriques, sur la base de la résine époxy d'un anhydride d'acide polycarboxylique,

(4) une quantité accélérante d'au moins un accélérateur de réticulation époxy, qui est un composé onium d'un sel stanneux d'un acide monocarboxylique,

(5) une quantité réticulante d'un peroxyde organique.

2. Composition selon la revendication 1, où le composé époxy est un glycidylpolyéther d'un phénol polyhydrique ou d'un phénol polyhydrique hydrogéné.

3. Composition selon la revendication 2 où le phénol polyhydrique est le 2,2 - bis(4 - hydroxyphényl)propane.

4. Composition selon l'une quelconque des revendications 1 à 3 où l'anhydride d'acide est l'anhydride trimellitique ou le dianhydride 3,3',4,4' - benzophénone - tétracarboxylique.

5. Composition selon l'une quelconque des revendications 1 à 4 où l'accélérateur de réticulation époxy est l'iodure d'éthyl-triphényl-phosphonium ou l'octoate stanneux.